# EUROPÄISCHE PATENTSCHRIFT

(11) **EP 3 750 723 B1**
(45) Veröffentlichungstag und Bekanntmachung des Hinweises auf die Patenterteilung: **26.01.2022**
(21) Anmeldenummer: 20172278.2
(22) Anmeldetag: 30.04.2020
(51) Int. Cl.: B60C 11/13, B60C 11/03, B60C 11/01

(54) **FAHRZEUGLUFTREIFEN**
PNEUMATIC TYRE
PNEUMATIQUE DE VÉHICULE

(30) Priorität: 13.06.2019 DE 102019208593
(43) Veröffentlichungstag der Anmeldung: 16.12.2020
(73) Patentinhaber: Continental Reifen Deutschland GmbH, 30165 Hannover (DE)
(72) Erfinder: Tomforde, Willem, 30419 Hannover (DE); Rittweger, Stefan, 30419 Hannover (DE); Neumann, Marcel, 30419 Hannover (DE)
(74) Vertreter: Continental Corporation

(56) Entgegenhaltungen:
- EP-A1- 2 332 748
- EP-A1- 3 388 256
- EP-A1- 3 456 552
- EP-A2- 0 339 335
- EP-A2- 2 404 768
- WO-A1-2018/059759
- DE-A1-102009 003 365
- DE-A1-102014 220 981
- US-A1- 2018 134 089

## Beschreibung

### Fahrzeugluftreifen

Die Erfindung betrifft einen Fahrzeugluftreifen mit einem Laufstreifen mit zwei schulterseitigen Profilrippen, welche jeweils mit eine Vielzahl von über die Bodenaufstandsfläche hinausverlaufenden Querrillen mit jeweils zwei Rillenkanten versehen sind, von welchen sich die eine Rillenkante aus zwei an einer Knickstelle aneinander anschließenden und einen Winkel von 130° bis 175° einschließenden Kantenabschnitten zusammensetzt, wobei die Querrillen eine in Umfangsrichtung ermittelte Breite aufweisen, welche ausgehend von der jeweiligen Knickstelle zumindest zum laufstreifenaußenseitigen Ende der Querrille abnimmt und wobei sich in jeder Profilrippe die Knickstellen der Rillenkanten der Querrillen - bezogen auf die axiale Richtung - in übereinstimmenden Positionen sowie in axialer Richtung innerhalb eines Abstandes von bis zu 15,0 mm vom seitlichen Rand der Bodenaufstandsfläche befinden.

Ein derartiger Fahrzeugluftreifen ist beispielsweise aus der WO 2018/059759 A1 bekannt. Bei einem der beschriebenen Ausführungsbeispiele weist der Laufstreifen des Reifens zwei schulterseitige Profilrippen mit jeweils vier Querrillenreihen auf. Jede Querrillenreihe ist aus einer Vielzahl von über den Umfang der Profilrippe verteilt angeordneten, jeweils parallel zueinander verlaufenden Querrillen gebildet, wobei sich jede Querrille aus zwei unter einem stumpfen Winkel aneinander anschließenden Rillenabschnitten zusammensetzt. Die Rillenkanten der Querrillen weisen jeweils eine Knickstelle auf und setzen sich jeweils zwei Kantenabschnitten zusammen, die einen Winkel von zirka 140° bis 160° (aus den Figuren gemessen) einschließen. Bei einer der Querrillenreihen verlaufen die Querrillen über die Bodenaufstandsfläche hinaus, wobei sich die Knickstellen der Rillenkanten innerhalb der Bodenaufstandsfläche befinden und zum seitlichen Rand der Bodenaufstandsfläche einen wenige Millimeter großen Abstand aufweisen. In jedem Rillenabschnitt ist eine zu einem Kantenabschnitt verlaufende Fase ausgebildet, wobei die in dem einen Rillenabschnitt befindliche Fase zum Kantenabschnitt der einen Rillenkante und die in dem anderen Rillenabschnitt befindliche Fase zum Kantenabschnitt der anderen Rillenkante verläuft. Solche Profilrippen sind unter anderem für die Brems- und Handlingeigenschaften von Vorteil und weisen ein gleichmäßiges Abriebverhalten auf.

Aus der DE 10 2014 220 981 A1 ist ein Fahrzeugluftreifen mit einem laufrichtungsgebunden profilierten Laufstreifen mit schulterseitigen Profilrippen mit Querrillen bekannt, wobei die Querrillen jeweils eine beim Abrollen des Reifens bei Vorwärtsfahrt zuerst in den Untergrund eintretende einlaufende Rillenkante mit einer Knickstelle und eine auslaufende Rillenkante aufweisen. Die Rillenkante mit der Knickstelle setzt sich aus einem kürzeren und einem längeren Kantenabschnitt zusammen, welche unter einem Winkel von 140° bis 170° aneinander anschließen, wobei der kürzere Kantenabschnitt bis zu einer die Profilrippe begrenzenden Umfangsrille verläuft. Der längere Kantenabschnitt ist mit einer Fase versehen, welche entlang des kürzeren Kantenabschnittes ausläuft und für die Bremseigenschaften auf trockener Fahrbahn von Vorteil sein soll. Ferner sollen solche Querrillen für eine gute Wasserableitung sorgen.

Es ist bekannt, dass bei der Ausgestaltung von Laufstreifenprofilen die Fahreigenschaften auf trockener Fahrbahn ("Trockenperformance") in einem Zielkonflikt zu den Fahreigenschaften auf nasser Fahrbahn ("Nässeperformance") stehen. Für eine gute Trockenperformance ist es von Vorteil, wenn der Laufstreifen eine möglichst große Kontaktfläche zum Untergrund aufweist, damit Brems-, Traktions- und Seitenführungskräfte möglichst wirkungsvoll auf die Fahrbahn übertragen werden können. Gleichzeitig sind entsprechende Profilnegative, insbesondere Querrillen, in den Schulterbereichen des Laufstreifens erforderlich, um den Laufstreifen beim Fahren auf nasser Fahrbahn zu entwässern. Vor allem bei sportlicher Fahrweise, insbesondere bei schneller Kurvenfahrt, werden die Schulterbereiche des Laufstreifens besonders stark beansprucht, sodass diesen im Hinblick auf den zwischen der Trockenperformance und der Nässeperformance bestehendem Zielkonflikt eine besondere Bedeutung zukommt.

Der Erfindung liegt die Aufgabe zugrunde, bei einem Fahrzeugluftreifen der eingangs genannten Art die schulterseitigen Profilrippen des Laufstreifen auf eine im Hinblick auf den genannten Zielkonflikt deutlich verbesserte Weise zu gestalten.

Gelöst wird die gestellte Aufgabe erfindungsgemäß dadurch, dass Querrillen vorgesehen sind, deren zweite Rillenkante in Draufsicht derart einheitlich gekrümmt ist, dass eine die Enden der zweiten Rillenkante verbindende Linie innerhalb der Querrille verläuft.

Die erfindungsgemäß gestalteten Querrillen zeichnen sich daher dadurch aus, dass sich ihre breitesten Stellen, bei den Knickstellen an den einen Rillenkanten, nahe beim seitlichen Rand der Bodenaufstandsfläche befinden. Durch die Knickstellen sind die Querrillen an den Randbereichen der Bodenaufstandsfläche breit, wodurch beim Fahren auf nasser Fahrbahn, insbesondere bei Geradeausfahrt, die schulterseitigen Profilrippen wirksamer als bisher Wasser ableiten können. Sind gute Handlingeigenschaften erforderlich, etwa beim Bremsen oder bei Kurvenfahrt, wird die Bodenaufstandsfläche kurzzeitig verbreitert bzw. in Richtung zur Kurvenaußenseite verlagert. Die seitlichen Ränder der Bodenaufstandsfläche verschieben sich also kurzzeitig relativ zu den breitesten Bereichen der Querrillen nach außen, wodurch sich die Kontaktfläche des Laufstreifens zum Untergrund erhöht und derart die Kraftübertragung zum Untergrund verbessert ist. Die Handlingperformance auf trockner Fahrbahn sowie die Fahreigenschaften auf nasser Fahrbahn sind somit gleichermaßen verbessert.

Die gekrümmte Rillenkante trägt zu einer Verbreiterung der Querrillen am bzw. nahe am seitlichen Rand der Bodenaufstandsfläche bei und verschmälert die Querrillen zusätzlich zu ihren Enden, wodurch sich die Handlingperformance auf trockner Fahrbahn sowie die Fahreigenschaften auf nasser Fahrbahn weiter verbessern lassen.

Es ist dabei besonders bevorzugt, wenn der Abstand der Knickstellen zum seitlichen Rand der Bodenaufstandsfläche bis zu 10,0 mm, insbesondere bis zu 5,0 mm, beträgt.

Gemäß einer weiteren bevorzugten Ausführungsvariante beträgt die in Umfangsrichtung ermittelte Breite der Querrillen an ihren laufstreifenaußenseitigen Enden bis zu 25%, insbesondere 10% bis 20%, ihrer in Umfangsrichtung ermittelten Breite an den Knickstellen ihrer Rillenkanten. Im Bereich außerhalb der Bodenaufstandsfläche verschmälern sich solche Querrillen daher keilartig. Dies trägt zu einer Vergrößerung der Kontaktfläche des Laufstreifens zum Untergrund in Handlingsituationen bei.

In zumindest einer Profilrippe befinden sich die Knickstellen der Querrillen gemäß bevorzugter Varianten entweder innerhalb oder außerhalb der Bodenaufstandsfläche. Auf diese Weise kann die Stabilität der Profilrippen, in Abhängigkeit von der sonstigen Gestaltung der Profilierung, günstig beeinflusst werden. Die schulterseitigen Profilrippen können sich diesbezüglich voneinander unterscheiden.

Dabei ist es auch von Vorteil, wenn in zumindest einer Profilrippe sich die Knickstellen der Querrille auf dem seitlichen Rand der Bodenaufstandsfläche befinden.

Dabei ist gemäß einer weiteren bevorzugten Ausführungsvariante vorgesehen, dass die Querrillen mit der zweiten, einheitlich gekrümmten Rillenkante in derselben schulterseitigen Profilrippe verlaufen.

Für die Handlingperformance des Reifens ist es darüber hinaus günstig, wenn Querrillen vorgesehen sind, welche laufstreifeninnenseitig innerhalb der schulterseitigen Profilrippen enden. Profilrippen mit solchen Querrillen weisen - im Gegensatz zu Profilrippen mit einmündenden Querrillen - eine höhere Steifigkeit auf.

Eine weitere bevorzugte Ausführungsvariante ist dadurch gekennzeichnet, dass die Kantenabschnitte der mit Knickstellen versehenen Rillenkanten jeweils eine Länge von 40% bis 60% der Länge der Rillenkanten aufweisen.

Gemäß einer weiteren bevorzugten Ausführungsvariante sind die geknickten Rillenkanten der Querrillen, welche in der einen schulterseitigen Profilrippe verlaufen, zu den geknickten Rillenkanten der Querrillen, welche in der anderen schulterseitigen Profilrippe verlaufen, in entgegengesetzte Umfangsrichtungen orientiert. In der einen schulterseitigen Profilrippe sind daher die vor allem unter Traktionsbelastung und in der anderen schulterseitigen Profilrippe die vor allem unter Bremsbelastung beanspruchten Rillenkanten der Querrillen geknickt. Im Hinblick auf die geknickten Rillenkanten ist der Laufstreifen daher vorteilhafterweise drehrichtungsfrei.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 eine Draufsicht auf einen Umfangsabschnitt eines Laufstreifens eines Fahrzeugluftreifens mit einer Ausführungsvariante der Erfindung und
Fig. 2 eine vergrößerte Ansicht auf eine Querrille des Laufstreifens aus Fig. 1.

Gemäß der Erfindung ausgeführte Fahrzeugluftreifen sind insbesondere Reifen in Radialbauart für Personenkraftwagen, Vans oder Light-Trucks.

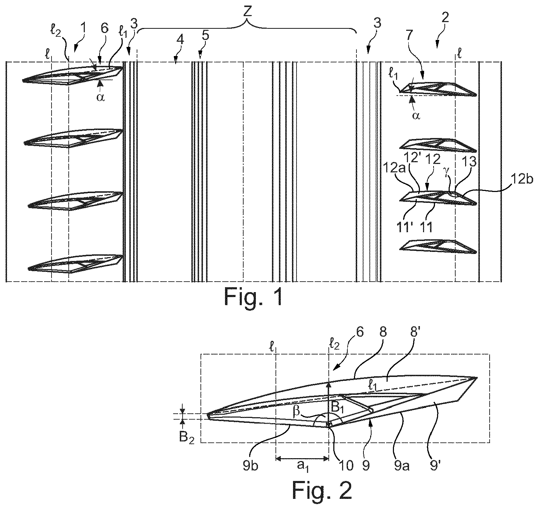

Wie Fig. 1 zeigt, weist der Laufstreifen schulterseitige Profilrippen 1, 2 sowie einen zwischen diesen befindlichen zentralen Laufstreifenbereich Z auf. Die seitlichen Ränder des bodenberührenden Teils des Laufstreifens sind in Fig. 1 durch zwei gestrichelte Linien l angedeutet, wobei der bodenberührende Teil des Laufstreifens dem statisch ermittelten Footprint gemäß E.T.R.T.O.-Standards entspricht (Last bei 70 % der maximalen Tragfähigkeit bei einem Innendruck von 85 % nach E.T.R.T.O.-Norm).

Die schulterseitigen Profilrippen 1, 2 sind vom zentralen Laufstreifenbereich Z jeweils durch eine beim gezeigten Ausführungsbeispiel in Draufsicht gerade verlaufende schulterseitige Umfangsrille 3 getrennt. Im zentralen Laufstreifenbereich Z verlaufen beim gezeigten Ausführungsbeispiel drei mittlere Profilrippen 4, welche durch mittlere Umfangsrillen 5 voneinander getrennt sind. Die mittleren Profilrippen 4 sind lediglich schematisch dargestellt und können in an sich bekannter Weise mit Rillen und/oder Einschnitten strukturiert sein.

Die schulterseitigen Profilrippen 1, 2 sind über ihre Umfangserstreckung jeweils mit einer Vielzahl von Querrillen 6 (Profilrippe 1) und 7 (Profilrippe 2) versehen, welche vor der jeweiligen schulterseitigen Umfangsrille 3 in einem Abstand von beispielsweise 2,0 mm bis 7,0 mm enden. Es können auch Querrillen 6, 7 vorgesehen sein, welche in die jeweilige Umfangsrille 3 einmünden. Die Querrillen 6, 7 laufen über den seitlichen Rand der Bodenaufstandsfläche (Linien l) hinaus, verleihen den Profilrippen 1, 2 eine blockartige Struktur, verlaufen innerhalb jeder Profilrippe 1, 2 - betrachtet in Draufsicht und bezogen auf entlang der größten Rillenlänge ausgerichteten, geraden Linien l₁ - parallel zueinander sowie zur axialen Richtung unter einem Winkel α von vorzugsweise 0° bis 20°, insbesondere von bis zu 7°. An ihrer tiefsten Stelle weisen die Querrillen 6, 7 in radialer Richtung eine Tiefe von insbesondere 6,0 mm bis 9,0 mm auf, wobei die Tiefe der Querrillen 6, 7, wie an sich bekannt, zu ihren laufstreifenaußenseitigen Enden abnimmt. Die Querrillen 6, 7 sind jeweils durch in den Figuren nicht bezeichnete Rillenwände und einen Rillengrund begrenzt.

Wie insbesondere Fig. 2 zeigt, sind die in der schulterseitigen Profilrippe 1 verlaufenden Querrillen 6 an der Laufstreifenperipherie jeweils durch eine einheitlich gekrümmte, also durchgehend kreisbogenartige, Rillenkante 8 und eine dieser gegenüberliegende, eine Knickstelle 10 aufweisende geknickte Rillenkante 9 begrenzt. Die gekrümmte Rillenkante 8 ist in Draufsicht derart gekrümmt, dass eine die Enden der Rillenkante 8 verbindende Linie (entspricht der bereits erwähnten Linie l₁) in Draufsicht innerhalb der Querrille 6 liegt. Die Knickstellen 10 der geknickten Rillenkanten 9 liegen auf einer in Umfangsrichtung umlaufenden Linie l₂ (vergleiche Fig. 1), welche beim gezeigten Ausführungsbeispiel innerhalb der Bodenaufstandsfläche liegt und zur Linie l einen in axialer Richtung ermittelten Abstand a₁ von bis zu 15,0 mm, insbesondere von bis zu 10,0 mm, besonders bevorzugt von bis zu 5,0 mm, aufweist. Die geknickten Rillenkanten 9 setzen sich jeweils aus einem in Draufsicht gerade oder kaum merkbar gebogen verlaufenden, laufstreifeninnenseitigen Kantenabschnitt 9a und einem in Draufsicht gerade verlaufenden, laufstreifenaußenseitigen Kantenabschnitt 9b zusammen, wobei der Kantenabschnitt 9a und der Kantenabschnitt 9b an der Knickstelle 10 aneinander anschließen. Der Kantenabschnitt 9a und der Kantenabschnitt 9b schließen miteinander einen Winkel β von 130° bis 175°, insbesondere von 155° bis 165°, ein und nehmen jeweils eine Länge von 40% bis 60% der Länge der geknickten Rillenkante 9 ein.

An der Knickstelle 10 weist die Querrille 6 - ermittelt in Umfangsrichtung sowie zwischen den Rillenkanten 8 und 9 - ihre breiteste Stelle mit einer Breite B₁ von 4,0 mm bis 8,0 mm, insbesondere von 5,0 mm bis 7,0 mm, auf. Ausgehend von der Knickstelle 10 nimmt die in Umfangsrichtung zwischen den Rillenkanten 8 und 9 ermittelte Breite der Querrille 6 kontinuierlich zu den Enden der Rillenkanten 8 und 9 ab, die Querrille 6 wird daher zu ihren Enden kontinuierlich schmäler. Zwischen dem laufstreifenaußenseitigen Enden der Rillenkante 8 und dem laufstreifenaußenseitigen Ende des Kantenabschnittes 9b weist die Querrille 6 eine Breite B₂ auf, welche bis zu 25%, insbesondere 10% bis 20%, der Breite B₁ beträgt. Alternativ können der laufstreifenaußenseitige Kantenabschnitt 9b und die Rillenkante 8 an ihren laufstreifenaußenseitigen Enden zusammenlaufen.

Beim gezeigten Ausführungsbeispiel geht von der gebogenen Rillenkante 8 eine Fase 8' und vom Kantenabschnitt 9a eine Fase 9' aus. Die Fasen 8', 9' erscheinen, im senkrecht zu den Rillenkanten 8, 9 ausgerichteten Querschnitt betrachtet, als gerade Linien, welche zur radialen Richtung unter einem Winkel von beispielsweise 40° bis 70°, insbesondere von 55° bis 65°, geneigt sind.

Wie Fig. 1 ferner zeigt, sind die Querrillen 7 in der Profilrippe 2 jeweils durch eine gerade verlaufende Rillenkante 11 und eine geknickten Rillenkante 12 mit Knickstelle 13 begrenzt. Die Rillenkante 11 verläuft unter dem bereits erwähnten Winkel α, die Rillenkante 12 setzt sich aus zwei Kantenabschnitten 12a, 12b zusammen, welche einen Winkel γ von 140° bis 170° einschließen. Die Knickstelle 13 liegt beim gezeigten Ausführungsbeispiel am seitlichen Rand der Bodenaufstandsfläche (Linie l). Von dem Kantenabschnitt 12a geht eine Fase 12', von der Rillenkante 11 eine Fase 11' aus.

Beim gezeigten Ausführungsbeispiel sind die in der schulterseitigen Profilrippe 1 verlaufenden Querrillen 6 zu den in der schulterseitigen Profilrippe 2 verlaufenden Querrillen 7 derart orientiert, dass die geknickten Rillenkanten 9 der Querrillen 6 (Fig. 3) zu den geknickten Rillenkanten 12 der Querrillen 7 (Fig. 1) in entgegengesetzten Umfangsrichtungen orientiert sind.

Die Erfindung ist auf die beschriebene Ausführungsvariante nicht beschränkt.

Die Linien, auf welchen die Knickstellen der geknickten Rillenkanten der innerhalb einer schulterseitigen Profilrippe verlaufenden Querrillen liegen, können am jeweiligen seitlichen Rand der Bodenaufstandsfläche liegen oder zu diesem einen in axialer Richtung ermittelten Abstand von bis zu 15,0 mm aufweisen. Die Lage der Knickstellen in der einen schulterseitigen Profilrippe ist somit unabhängig von der Lage der Knickstellen in der anderen schulterseitigen Profilrippe.

### Bezugsziffernliste

- 1: schulterseitige Profilrippe
- 2: schulterseitige Profilrippe
- 3: schulterseitige Umfangsrille
- 4: mittlere Profilrippe
- 5: mittlere Umfangsrille
- 6: Querrille
- 7: Querrille
- 8: Rillenkante
- 8': Fase
- 9: Rillenkante
- 9a: laufstreifeninnenseitiger Kantenabschnitt
- 9b: laufstreifenaußenseitiger Kantenabschnitt
- 9': Fase
- 10: Knickstelle
- 11: Rillenkante
- 11': Fase
- 12: Rillenkante
- 12a: laufstreifeninnenseitiger Kantenabschnitt
- 12b: laufstreifenaußenseitiger Kantenabschnitt
- 12': Fase
- 13: Knickstelle
- a₁: Abstand
- B₁, B₂: Breite
- l: Linie (seitlicher Rand der Bodenaufstandsfläche)
- l₁, l₂: Linie
- Z: zentraler Laufstreifenbereich
- α, β, γ: Winkel

## Patentansprüche

1. Fahrzeugluftreifen mit einem Laufstreifen mit zwei schulterseitigen Profilrippen (1, 2), welche jeweils mit eine Vielzahl von über die Bodenaufstandsfläche hinausverlaufenden Querrillen (6, 7) mit jeweils zwei Rillenkanten (8, 9, 11, 12) versehen sind, von welchen sich die eine Rillenkante (9, 12) aus zwei an einer Knickstelle (10, 13) aneinander anschließenden und einen Winkel (β, γ) von 130° bis 175° einschließenden Kantenabschnitten (9a, 9b, 12a, 12b) zusammensetzt, wobei die Querrillen (6, 7) eine in Umfangsrichtung ermittelte Breite (B₁, B₂) aufweisen, welche ausgehend von der jeweiligen Knickstelle (10, 13) zumindest zum laufstreifenaußenseitigen Ende der Querrille (6, 7) abnimmt und wobei sich in jeder Profilrippe (1, 2) die Knickstellen (10, 13) der Rillenkanten (9, 12) der Querrillen (6, 7) - bezogen auf die axiale Richtung - in übereinstimmenden Positionen sowie in axialer Richtung innerhalb eines Abstandes von bis zu 15,0 mm vom seitlichen Rand (l) der Bodenaufstandsfläche befinden,
**dadurch gekennzeichnet,**
**dass** Querrillen (6) vorgesehen sind, deren zweite Rillenkante (8) in Draufsicht derart einheitlich gekrümmt ist, dass eine die Enden der zweiten Rillenkante (8) verbindende Linie (l₁) innerhalb der Querrille (6) verläuft.

2. Fahrzeugluftreifen nach Anspruch 1, **dadurch gekennzeichnet, dass** der Abstand (a₁) der Knickstellen (10, 13) zum seitlichen Rand (l) der Bodenaufstandsfläche bis zu 10,0 mm, insbesondere bis zu 5,0 mm, beträgt.

3. Fahrzeugluftreifen nach Anspruch 1 oder 2, **dadurch gekennzeichnet, dass** die in Umfangsrichtung ermittelte Breite (B₂) der Querrillen (6, 7) an ihren laufstreifenaußenseitigen Enden bis zu 25%, insbesondere 10% bis 20%, ihrer in Umfangsrichtung ermittelten Breite (B₁) an den Knickstellen (10, 13) ihrer Rillenkanten (9, 12) beträgt.

4. Fahrzeugluftreifen nach einem der Ansprüche 1 bis 3, **dadurch gekennzeichnet, dass** sich in zumindest einer Profilrippe (1, 2) die Knickstellen (10) der Querrillen (6) entweder innerhalb oder außerhalb der Bodenaufstandsfläche befinden.

5. Fahrzeugluftreifen nach einem der Ansprüche 1 bis 4, **dadurch gekennzeichnet, dass** sich in zumindest einer Profilrippe (1, 2) die Knickstellen (13) der Querrillen (7) auf dem seitlichen Rand (l) der Bodenaufstandsfläche befinden.

6. Fahrzeugluftreifen nach einem der Ansprüche 1 bis 5, **dadurch gekennzeichnet, dass** die Querrillen (6) mit der zweiten, einheitlich gekrümmten Rillenkante (8) in derselben schulterseitigen Profilrippe (1) verlaufen.

7. Fahrzeugluftreifen nach einem der Ansprüche 1 bis 6, **dadurch gekennzeichnet, dass** Querrillen (7) vorgesehen sind, welche laufstreifeninnenseitig innerhalb der schulterseitigen Profilrippen (1, 2) enden.

8. Fahrzeugluftreifen nach einem der Ansprüche 1 bis 7, **dadurch gekennzeichnet, dass** die Kantenabschnitte (9a, 9b, 12a, 12b) der mit Knickstellen (10, 13) versehenen Rillenkanten (9, 12) jeweils eine Länge von 40% bis 60% der Länge der Rillenkanten (9, 12) aufweisen.

9. Fahrzeugluftreifen nach einem der Ansprüche 1 bis 8, **dadurch gekennzeichnet, dass** die geknickten Rillenkanten (9) der Querrillen (6), welche in der einen schulterseitigen Profilrippe (1) verlaufen, zu den geknickten Rillenkanten (12) der Querrillen (7), welche in der anderen schulterseitigen Profilrippe (2) verlaufen, in entgegengesetzte Umfangsrichtungen orientiert sind.

## Claims

1. Pneumatic vehicle tyre comprising a tread with two shoulder-side profile ribs (1, 2), which are respectively provided with a multiplicity of transverse grooves (6, 7), which run over the ground contact area and have in each case two groove edges (8, 9, 11, 12), of which one groove edge (9, 12) is made up of two edge portions (9a, 9b, 12a, 12b) adjoining one another at a kink (10, 13) and including an angle (β, γ) of 130° to 175°, wherein the transverse grooves (6, 7) have a width (B₁, B₂), determined in the circumferential direction, which decreases from the respective kink (10, 13) at least up to the end on the outside of the tread of the transverse groove (6, 7) and wherein, in each profile rib (1, 2), the kinks (10, 13) of the groove edges (9, 12) of the transverse grooves (6, 7) are in coinciding positions - with respect to the axial direction - and within a distance in the axial direction of up to 15.0 mm from the side edge (1) of the ground contact area,
**characterized**
**in that** transverse grooves (6) of which the second groove edge (8) is uniformly curved in plan view in such a way that a line (l₁) connecting the ends of the second groove edge (8) runs within the transverse groove (6) are provided.

2. Pneumatic vehicle tyre according to Claim 1, **characterized in that** the distance (a₁) of the kinks (10, 13) from the side edge (1) of the ground contact area is up to 10.0 mm, in particular up to 5.0 mm.

3. Pneumatic vehicle tyre according to Claim 1 or 2, **characterized in that** the width (B₂), determined in the circumferential direction, of the transverse grooves (6, 7) at their ends on the outside of the tread is up to 25%, in particular 10% to 20%, of their width (B₁), determined in the circumferential direction, at the kinks (10, 13) of their groove edges (9, 12).

4. Pneumatic vehicle tyre according to one of Claims 1 to 3, **characterized in that**, in at least one profile rib (1, 2), the kinks (10) of the transverse grooves (6) are either inside or outside the ground contact area.

5. Pneumatic vehicle tyre according to one of Claims 1 to 4, **characterized in that**, in at least one profile rib (1, 2), the kinks (13) of the transverse grooves (7) are on the lateral edge (1) of the ground contact area.

6. Pneumatic vehicle tyre according to one of Claims 1 to 5, **characterized in that** the transverse grooves (6) run with the second, uniformly curved groove edge (8) in the same shoulder-side profile rib (1).

7. Pneumatic vehicle tyre according to one of Claims 1 to 6, **characterized in that** transverse grooves (7) which on the inside of the tread end within the shoulder-side profile ribs (1, 2) are provided.

8. Pneumatic vehicle tyre according to one of Claims 1 to 7, **characterized in that** the edge portions (9a, 9b, 12a, 12b) of the groove edges (9, 12) provided with kinks (10, 13) have in each case a length of 40% to 60% of the length of the groove edges (9, 12).

9. Pneumatic vehicle tyre according to one of Claims 1 to 8, **characterized in that** the kinked groove edges (9) of the transverse grooves (6) that run in one shoulder-side profile rib (1) are oriented in the opposite circumferential direction to the kinked groove edges (12) of the transverse grooves (7) that run in the other shoulder-side profile rib (2).

## Revendications

1. Pneumatique de véhicule comprenant une bande de roulement comprenant deux nervures de profil (1, 2) côté épaulement, qui sont pourvues chacune d'une pluralité de rainures transversales (6, 7) s'étendant au-delà de la surface de contact avec le sol, comprenant chacune deux bords de rainure (8, 9, 11, 12), parmi lesquels un bord de rainure (9, 12) se compose de deux sections de bord (9a, 9b, 12a, 12b) se raccordant l'une à l'autre en un point d'inflexion (10, 13) et formant un angle (β, γ) de 130° à 175°, les rainures transversales (6, 7) présentant une largeur (B₁, B₂) déterminée dans la direction circonférentielle qui diminue en partant du point d'inflexion respectif (10, 13) au moins vers l'extrémité de la rainure transversale (6, 7) côté extérieur de la bande de roulement et, dans chaque nervure de profil (1, 2), les points d'inflexion (10, 13) des bords de rainure (9, 12) des rainures transversales (6, 7) se trouvant, par rapport à la direction axiale, à des positions coïncidentes, ainsi que, dans la direction axiale, dans les limites d'une distance de jusqu'à 15,0 mm du bord latéral (l) de la surface de contact avec le sol, **caractérisé en ce que**
des rainures transversales (6) sont prévues, dont le deuxième bord de rainure (8) est, en vue de dessus, uniformément courbé de telle sorte qu'une ligne (l₁) reliant les extrémités du deuxième bord de rainure (8) s'étend à l'intérieur de la rainure transversale (6).

2. Pneumatique de véhicule selon la revendication 1, **caractérisé en ce que** la distance (a₁) des points d'inflexion (10, 13) au bord latéral (l) de la surface de contact avec le sol est de jusqu'à 10,0 mm, notamment de jusqu'à 5,0 mm.

3. Pneumatique de véhicule selon la revendication 1 ou 2, **caractérisé en ce que** la largeur (B₂) des rainures transversales (6, 7) déterminée dans la direction circonférentielle à leurs extrémités côté extérieur de la bande de roulement est de jusqu'à 25 %, notamment 10 % à 20 %, de leur largeur (B₁) déterminée dans la direction circonférentielle aux points d'inflexion (10, 13) de leurs bords de rainure (9, 12).

4. Pneumatique de véhicule selon l'une quelconque des revendications 1 à 3, **caractérisé en ce que**, dans au moins une nervure de profil (1, 2), les points d'inflexion (10) des rainures transversales (6) se trouvent soit à l'intérieur, soit à l'extérieur de la surface de contact avec le sol.

5. Pneumatique de véhicule selon l'une quelconque des revendications 1 à 4, **caractérisé en ce que**, dans au moins une nervure de profil (1, 2), les points d'inflexion (13) des rainures transversales (7) se trouvent sur le bord latéral (l) de la surface de contact avec le sol.

6. Pneumatique de véhicule selon l'une quelconque des revendications 1 à 5, **caractérisé en ce que** les rainures transversales (6) comprenant le deuxième bord de rainure uniformément courbé (8) s'étendent dans la même nervure de profil (1) côté épaulement.

7. Pneumatique de véhicule selon l'une quelconque des revendications 1 à 6, **caractérisé en ce que** des rainures transversales (7) sont prévues, qui se terminent côté intérieur de la bande de roulement à l'intérieur des nervures de profil (1, 2) côté épaulement.

8. Pneumatique de véhicule selon l'une quelconque des revendications 1 à 7, **caractérisé en ce que** les sections de bord (9a, 9b, 12a, 12b) des bords de rainure (9, 12) pourvus de points d'inflexion (10, 13) présentent chacune une longueur de 40 % à 60 % de la longueur des bords de rainure (9, 12).

9. Pneumatique de véhicule selon l'une quelconque des revendications 1 à 8, **caractérisé en ce que** les bords de rainure fléchis (9) des rainures transversales (6) qui s'étendent dans une nervure de profil (1) côté épaulement sont orientés dans des directions circonférentielles opposées aux bords de rainure fléchis (12) des rainures transversales (7) qui s'étendent dans l'autre nervure de profil (2) côté épaulement.
